Europäisches Patentamt

European Patent Office

Office européen des brevets

(11) Publication number: **0 130 843**
A2

# EUROPEAN PATENT APPLICATION

(21) Application number: **84304567.5**

(22) Date of filing: **04.07.84**

(51) Int. Cl.⁴: **G 11 B 5/02**, G 11 B 20/00

(30) Priority: **04.07.83 GB 8318046**
**26.10.83 GB 8328565**

(43) Date of publication of application: **09.01.85**
**Bulletin 85/2**

(84) Designated Contracting States: **AT BE CH DE FR GB IT LI LU NL SE**

(71) Applicant: **Hawkins, John William, 2 Tawny Avenue, Upminster Essex, RM14 2EN (GB)**

(72) Inventor: **Hawkins, John William, 2 Tawny Avenue, Upminster Essex, RM14 2EN (GB)**

(74) Representative: **Eder, Ephry, 2 Chichester Rents Chancery Lane, London WC2A 1EG (GB)**

(54) Recording information on magnetic recording means.

(57) A method of recording information, comprising the steps of:

(a) providing a magnetic storage means having magnetisable material and deliberately inhibiting the magnetic properties of said material over a zone of said storage means

(b) determining an inhibition value related to and indicative of at least one of the location and area of said zone, said inhibition value being specific to the one particular storage means deliberately inhibited in step (a), and

(c) subsequently recording said information in a manner such that replay thereof is only possible if a signal corresponding to the said inhibition value specific to that said particular storage means is first obtained.

Determination of said inhibition value is by means of a computer program providing the sub-steps of

(i) writing repeatedly a predetermined number of times to said storage means over an area including (at least part of) said zone a character set composed of at least one character

(ii) reading back the matter written over said area, and

(iii) calculating the difference between the number of times said character set was written and was read back, the value of this difference providing said inhibition value.

Recording step (c) includes the provision of an initialising program which comprises a repetition of the same sub-steps (i), (ii) and (iii) but the difference value last found is compared with the inhibition value first obtained and if a predetermined matching requirement is fulfilled by this comparison then said signal is generated.

The invention also provides a magnetic storage means or recording medium to which method steps (a) and (b) have been applied, method step (c) being applied to another zone of the same storage means/recording medium or to another storage means/recording medium that is paired with the first.

ACTORUM AG

**"RECORDING INFORMATION ON MAGNETIC RECORDING MEANS"**

This invention relates to the recording of information on magnetic recording means such as tapes, discs and cards. The information to be recorded may be computer programs, data, sound or video signals.

## BACKGROUND TO THE INVENTION

A long-standing problem in the recording industry is the need to prevent unauthorised use and/or copying of the information material recorded and the protection of copyright generally. The detection of unauthorised copies of sound recordings and of video recordings is eased by the need for high volume sales to satisfy the large public who would be interested in such recordings. A much smaller public currently exists for recordings of computer programs and hence the scale of illegal activity by the copyist is smaller and less easy to detect, but potentially of greater financial loss to the legitimate proprietor of the Copyright in the original program.

It has already been proposed to provide computer programs that are operable only in conjunction with specific hardware that is connected to the user's machine. These add-on items of "program-specific" hardware are expensive relative to the cost of simple programs and hence not in practice suitable for all types of programs.

It has also been proposed, e.g. in UK Patent Specification No. 1525292, to provide gaps in original audio recordings which become "smudged" in any copy of the original recording whereby a copy can be identified. Proposals has also been made, e.g. in UK Patent Specifications Nos. 1529939 and 2035659, whereby interference with an original magnetic recording can be detected.

None of the prior art proposals provides a method or apparatus whereby any unauthorised copy of a magnetic recording can be made but will be unusable or the copied information thereon will be inaccessible. Thus whilst facilitating apprehension of "piracy" of magnetic recordings they do not directly prevent such piracy or prevent it being effective.

It is an object of the present invention to provide means whereby unauthorised copying results in a copy that cannot be utilised.

## BRIEF SUMMARY OF THE INVENTION

According to one aspect of this invention there is provided a technique for preventing the unauthorised use (of the original and/or of copies) of magnetically recorded information, characterised in that prior to recording said information a recording medium having magnetic material thereon or therein has its magnetic properties deliberately inhibited over a random zone specific to that individual recording medium, and a specific inhibition value related to and indicative of the location and/or area of said zone is determined, and in that said information is recorded in a manner such that replay thereof is only possible if a signal corresponding to said specific inhibition value is provided.

Said recorded information may be provided on another zone of the selfsame recording medium or on another recording medium.

Preferably determination of said specific inhibition value is by means of a computer program which repeatedly writes to said recording medium (over an area including at least part (preferably the entirety) of said zone) a predetermined number of times a randomly selected character or character set, reads back the written material, and calculates the difference between the number of times a character or character set was written and the number of times a character or character set is read, this number providing the inhibition value related to and indicative of the area of said zone.

Preferably the said manner of recording said information includes the provision of an initialising program which generates a search for said signal and inhibits access to said recorded information if the signal is absent.

According to another aspect of this invention there is provided a magnetic recording medium for use in a technique according to said one aspect of the invention, said recording medium being characterised by having magnetic material thereon or therein of which a zone of randomly selected location and/or area has its magnetic properties deliberately inhibited, and further characterised in that the location and/or area of said zone is identified or identifiable by an inhibition value specific to that medium or zone.

Preferably, for either aspect of the invention, the deliberately inhibited zone is a deliberately removed, e.g. scratched away, portion of the medium's magnetic recording surface. Alternatively the deliberately removed portion may be obtained by providing, e.g. punching, one or more holes through the medium. To minimise any resultant "noise" in operation of the medium, the hole(s) may be covered on one or each side, e.g. by adhesive tape.

0130843

- 4 -

## DESCRIPTION OF EMBODIMENTS OF THE INVENTION

For example, in one embodiment of the present invention a standard floppy disk, in virgin state, is taken and deliberately scratched, e.g. by a coin, to remove some of the magnetic recording surface and thereby leave a zone of inhibited magnetic properties. A computer program is devised which creates a random single data character, e.g. the letter A, and repeatedly writes this data character to the disk a sufficient number of times to fill at least the inhibited zone of the disk, the number of times being separately retained.

The program then reads the disk (or at least the aforementioned written area thereof) and counts the number of times the same data character is repeated. The program then computes the difference between the number of times the character is written and the number of times the character is read. This number provides an "inhibition" value corresponding to the area of the inhibited zone of the disk and, in view of the random nature of the initial deliberate scratch, is also specific to that particular disk.

The same disk, together with a separate note of its inhibition value and (optionally) with any appropriate password (see below), are then used, e.g. by a software house, in the process of recording the main computer program to be protected. The latter is provided with an initialising program portion that checks for the said specific inhibition value and provides access to, i.e. a reading of, the main program if, and only if, the initialising program portion detects the presence of said inhibition value. Since this inhibition value is specific to a particular disk, (and unknown to the purchaser or end user of the main program), it implies that the main program can only be run, i.e. read, if the disk incorporating the inhibited zone is available for checking by the initialising program portion. The initialising program portion and the main program may be provided on the same disk as that incorporating the inhibited zone (but, for example, in one or more files separate from the file including the inhibited zone) or may be provided on another separate disk (whereby both disks would have to be used to read the main program into the computer memory or buffer store).

The initialising program may, for example, be identical to that used for obtaining the inhibition value of the disk followed by a matching of the computed difference number (i.e. the difference between the number of times the randomly selected character is first written and then read back) with the actual inhibition value entered and stored as part of the initialising program. The matching requirement may be for numerical identity or may allow for a small tolerance from the entered inhibition value.

Clearly if a copy is made of the disk's main program, either onto a virgin disk or even another disk having an inhibited zone (which, due to the random nature of the inhibiting procedure, would have a different inhibition value), then running the initialising program portion would result in a mismatch between the new disk's inhibition value and the initially entered inhibition value whereby the main program could not be read.

The accompanying Program 1 Flowchart shows a particularly preferred example of a program for determining the specific inhibition value. The program variables employed are COUNT and NOMATCH, the latter's displayed value being the inhibition value that is specific to that disk. It will be appreciated that apart from the character "A" any other predetermined character or character set can be employed and there is no need for random character generation.

The accompanying Program II Flowchart shows a particularly preferred example of an initialising program which will prevent access to the recorded information that is to be protected against copying. This program increases "security" by providing for the random generation of a character (or character set), its value being stored as the program variable CHAR. The program constant CHECKCOUNT is set to the inhibition value of the "damaged" disk, i.e. to the value of NOMATCH determined from Program I, and the program constant PASSWORD is set to a value which will be checked by a program part of the recorded information that is to be protected against copying. The latter, which ensures that the PASSWORD value is the expected value, is stored in the file PRG and will be loaded into the computer by Program II if, and only if, all the checks are successful.

The above-described embodiments of the invention indicate how an inhibition value is related to the area of the inhibition zone, i.e. the extent of the "damage". However it is also possible, either alternatively or additionally, to provide an inhibition value indicative of and related to the position of the inhibited zone. This can be achieved, for example, by counting the number of characters read from the beginning of the disk until a damaged area is found. It would also be possible to count the number of "damaged" or inhibited zones and create a "damage profile" of the disk.

It will be appreciated that the disk may have its magnetic properties inhibited by scratching the surface (as described above) or by any other suitable means. For example, one or more holes may be punched or otherwise provided through the disk and, optionally, the hole(s) may be covered on each side of the disk by self-adhesive circular pieces of tape so as to reduce noise in use. Other methods of deliberately removing, damaging, corrupting, destroying, annihilating, mutilating, defacing etc. a small zone of the recording surface or medium of the magnetic storage device will be readily apparent to the skilled reader, all of which affect the magnetic properties of the zone to prevent them being subsequently changed. It will also be appreciated that the invention may be applied to magnetic recording media in any suitable form, e.g. fixed or removable disks, floppy diskettes, hard disks, tapes and magnetic cards.

The use of the above-described embodiments of this invention may, in one arrangement, involve the use of two disks (or other magnetic medium). The first disk, after any necessary formatting (e.g. to enable a micro-computer to identify the presence of the disk), is deliberately scratched or otherwise spoiled to provide an inhibited zone, and Program I is then run for this inhibited disk so as to determine its specific inhibition value. The second disk, in virgin form, is loaded with Program II (in "object" form to prevent it being LISTed) and the file CHARFILE created on it. To relate the second disk specifically to the first disk, the unique value of CHECKCOUNT in Program II on the second disk is provided by the first disk's specific inhibition value. Program II is likewise "specialised" to contain as the value of PASSWORD the value to be checked by the program part of the recorded information that is to be protected. The deviser of a computer program to be protected against copying, i.e. the aforesaid information (to be) recorded, can thus be supplied with just two disks and appropriate documenatation indicating (a) the value of PASSWORD, (b) that his program must check for the value of PASSWORD, and (c) that his program must be stored on file PRG.

In an alternative arrangement according to this invention, just one single disk is employed. On this disk a file is defined to reserve an area that will constitute or include the zone to be inhibited, the remaining or unreserved area of the disk being used for the information (to be) recorded and protected against copying. For example a dummy file can be created on the first half (or other fraction) of the disk and the inhibited zone provided carefully at the beginning of the disk so as to be wholly within this disk fraction containing the dummy file.

With either arrangement the recorded information can be copied but any such copy, e.g. a back-up copy, can only be used after transferring its contents back onto the disk from which it was taken.

## INDUSTRIAL APPLICABILITY

It will be appreciated that this invention is not merely a novel computer program, nor merely the incorporation of such a program on a conventional magnetic recording medium. Rather, as described above, embodiments of this invention relate to the provision (a) of a deliberately "damaged" magnetic recording medium, the degree of "damage" being specific to each individual such medium and determinable to provide a "damage" or "inhibition" value, and (b) a computer program (portion) to check for the use of the selfsame medium, rather than an unauthorised copy thereof, by checking for the presence of the same "damage" or inhibition value.

It will also be appreciated that although this invention is considered to be particularly suitable for the protection against copying of software (i.e. programs, data and the like) for micro-computers, mini-computers and mainframe computers, it is also considered to be suitable for the protection against copying of pre-recorded, magnetic tape, video and audio recordings, (be they on spools, reels or cassettes) - although such use may require some variation of the replay equipment.

0130843

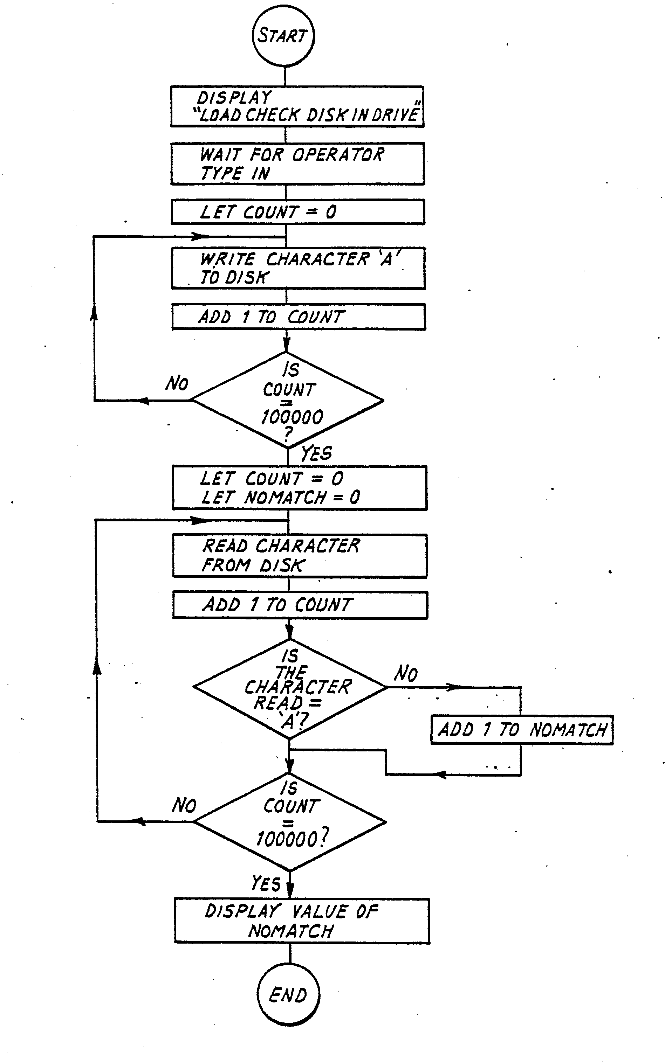

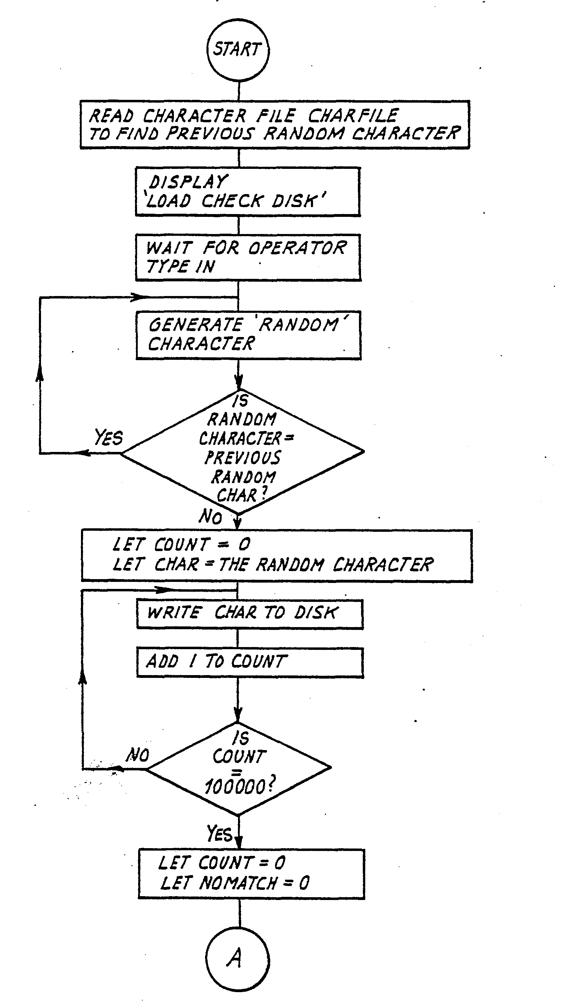

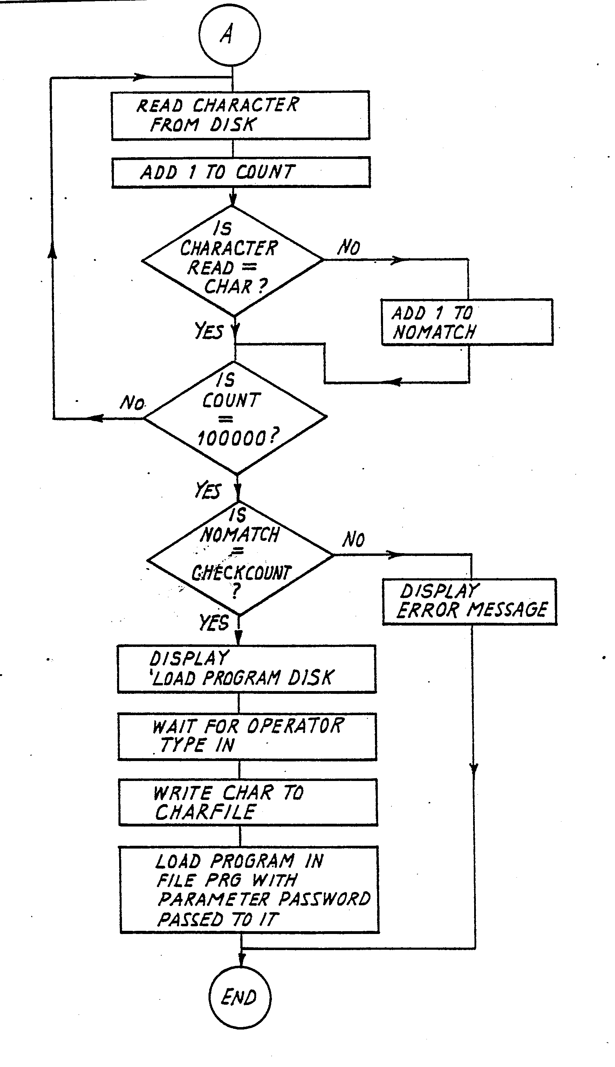

**CLAIMS**

1.   A method of recording information, comprising the steps of:

(a)   providing a magnetic storage means having magnetisable material and deliberately inhibiting the magnetic properties of said material over a zone of said storage means

(b)   determining an inhibition value related to and indicative of at least one of the location and area of said zone, said inhibition value being specific to the one particular storage means deliberately inhibited in step (a), and

(c)   subsequently recording said information in a manner such that replay thereof is only possible if a signal corresponding to the said inhibition value specific to that said particular storage means is first obtained.

2.   A method according to Claim 1, wherein said zone has at least one of its location and area randomly selected for each said storage means that is subjected to said method.

3.   A method according to Claim 1, wherein the step of determining said inhibition value comprises the sub-steps of

(i) writing repeatedly a predetermined number of times to said storage means over an area including (at least part of) said zone a character set composed of at least one character

(ii)   Reading back the matter written over said area, and

(iii)   calculating the difference between the nuber of times said character set was written and was read back, the value of this difference providing said inhibition value.

4. A method according to Claim 3, wherein said sub-steps (i), (ii) and (iii) are effected by means of a computer program.

5. A method according to Claim 1, wherein said recording step (c) includes the provision of an initialising program which generates a search for said signal and inhibits access to said information if the signal is absent.

6. A method according to Claims 3 and 5 combined, wherein said initialising program comprises the sub-steps of

(i) writing repeatedly a predetermined number of times to said storage means over an area including (at least part) of said zone a character set composed of at least one character

(ii) reading back the matter written over said area,

(iii) calculating the difference between the number of times said character set was written and was read back in accord with sub-steps 6(i) and 6(ii),

(iv) comparing this difference with the inhibition value obtained by sub-step 3(iii), and

(v) generating said signal if the comparison effected in sub-step 6(iv) provides conformity to a predetermined matching requirement.

7. A method according to Claim 1, wherein said deliberately inhibited zone comprises a deliberately removed portion of at least the magnetic recording surface of said storage means.

8.    Magnetic storage means to which the method steps (a) and (b) of Claim 1 have been applied.

9.    Magnetic storage means according to Claim 8 and to which the method step (c) of Claim 1 has been applied such that said information recorded thereon occupies another zone of the selfsame storage means.

10.    Two magnetic storage means of which one is in accord with Claim 8 and the other has had the method step (c) of Claim 1 applied thereto.

# PROGRAM 1 FLOWCHART

0130843

```
                    START

         DISPLAY
         "LOAD CHECK DISK IN DRIVE"

         WAIT FOR OPERATOR
         TYPE IN

         LET COUNT = 0

    ┌──► WRITE CHARACTER 'A'
    │    TO DISK
    │
    │    ADD 1 TO COUNT
    │
    │         IS
    │◄── No  COUNT
    │        = 100000 ?
    │
    │        YES
    │
         LET COUNT = 0
         LET NOMATCH = 0

    ┌──► READ CHARACTER
    │    FROM DISK
    │
    │    ADD 1 TO COUNT
    │
    │         IS
    │        THE
    │        CHARACTER ── NO ──► ADD 1 TO NOMATCH
    │        READ = 'A'?
    │
    │         IS
    │◄── No  COUNT
    │        = 100000 ?
    │
             YES

         DISPLAY VALUE OF
         NOMATCH

                    END
```

PROGRAM 2 FLOWCHART (A)

0130843

PROGRAM 2 FLOWCHART (B)

( A )

```
        READ CHARACTER
        FROM DISK

        ADD 1 TO COUNT

           IS
        CHARACTER ──── NO ──→   ADD 1 TO
        READ =                   NOMATCH
        CHAR ?

          YES

           IS
    No ──  COUNT
           =
        100000 ?

          YES

           IS
        NOMATCH ──── NO ──→   DISPLAY
           =                   ERROR MESSAGE
        CHECKCOUNT
           ?

          YES

        DISPLAY
        'LOAD PROGRAM DISK

        WAIT FOR OPERATOR
        TYPE IN

        WRITE CHAR TO
        CHARFILE

        LOAD PROGRAM IN
        FILE PRG WITH
        PARAMETER PASSWORD
        PASSED TO IT

         ( END )
```